Europäisches Patentamt

European Patent Office

Office européen des brevets

(19)

(11) **EP 1 441 279 A2**

(12) ## EUROPEAN PATENT APPLICATION

(43) Date of publication:
**28.07.2004 Bulletin 2004/31**

(51) Int Cl.⁷: **G06F 3/033**

(21) Application number: **03026072.3**

(22) Date of filing: **12.11.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **21.01.2003 US 347498**

(71) Applicant: **MICROSOFT CORPORATION**
**Redmond, WA 98052 (US)**

(72) Inventors:
• **Wang, Jian, Microsoft Research Asia**
  **Haidian District Beijing 100080 (CN)**
• **Dang, Yingnong, Microsoft Research Asia**
  **Haidian District Beijing 100080 (CN)**

• **Ma, Xiaoxu, Microsoft Research Asia**
  **Haidian District Beijing 100080 (CN)**
• **Chen, Liyong, Microsoft Research Asia**
  **Haidian District Beijing 100080 (CN)**
• **Zhang, Chunhui, Microsoft Research Asia**
  **Haidian District Beijing 100080 (CN)**
• **Wang, Qiang, Microsoft Research Asia**
  **Haidian District Beijing 100080 (CN)**
• **Lin, Zhouchen, Microsoft Research Asia**
  **Haidian District Beijing 100080 (CN)**

(74) Representative: **Grünecker, Kinkeldey,**
**Stockmair & Schwanhäusser Anwaltssozietät**
**Maximilianstrasse 58**
**80538 München (DE)**

(54) **Input device integrating inertial sensors**

(57)    An input device and method for generating electronic ink and/or other inputs is described. The input device may be used in combination with any surface through the use of an improved movement sensing technique for generating data for use in ink related applications and non-ink related applications. Improved motion sensing may be achieved using one or more inertial sensors for detecting movement of the input device by measuring such indicators as velocity, acceleration, and changes in electro-magnetic fields. The input device may include a memory for storing movement data and a transceiver for transmitting data representing movement of the input device to a host computer. Processing of the sensed movement data to generate images representative of hand written strokes may also be performed using a processor within the input device. The input device may be formed in the shape of a pen, and may include an ink cartridge to facilitate movement of the input device in a familiar manner.

Figure 2

EP 1 441 279 A2

## Description

### Related Applications

This application is related to U.S. Serial No. 10/284,417, entitled "Universal Computing Device," filed October 31, 2002, invented by Jian Wang and Chui Hui Zhang, whose contents are hereby expressly incorporated by reference.

### Background

### Technical Field

Aspects of the present invention relate to an apparatus and method for generating data inputs including electronic ink. More particularly, aspects of the present invention relate to an input device including inertial sensors to accurately detect movement of the input device.

### Related Art

Typical computers systems, especially computer systems using graphical user interface (GUI) systems, such as Microsoft Windows® , are optimized for accepting user input from one or more discrete input devices for entering text (such as a keyboard), and a pointing device (such as a mouse) with one or more buttons for activating user selections.

Some computing systems have expanded the input systems available to a user by providing a pen like stylus. The stylus may take the place of both the keyboard (for data entry) as well as the mouse (for control). Some computing systems preserve electronic ink in handwritten form. Other systems receive handwritten electronic information, or electronic ink, and immediately convert the electronic ink into text.

One shortcoming associated with the use of a stylus and sensor board system, is that use of the stylus is tied to the device incorporating the sensor board. In other words, the stylus may be used to generate inputs only when used in conjunction with the required sensor board. Additionally, accuracy of movement detection is affected by the proximity of the stylus to the sensing board. If the stylus is not positioned in contact with or within a very short distance from the screen and/or sensor board, the user's inputs may not be detected accurately. Further, intentional movements by a user may not be accurately captured using only a digitizer. One device that include conventional input devices includes "Novel Device for Inputting Handwriting Trajectory," Ricoh Technical Report No. 27, 52 NOVEMBER, 2001, whose contents are located at http://www:ricoh.co.jp/rdc/techreport/No27/Ronbun/A2707.df.

There is a need in the art for an input device that can be used in combination with or independent of a host device to which input data is transferred.

### Summary

Aspects of the present invention are accomplished using an input device including additional sensors for accurately capturing movement of the input device. Further aspects of the present invention permit the use of an input device in combination with any surface that will generate data based on movement of the input device. Aspects of the present invention provide an input device that may be used in combination with, or independent of, the device for which the data is intended. Aspects of the invention further involve improved movement sensing and analysis. The input device may be formed in the shape of a pen, and may include an ink cartridge for use of the input device in a manner familiar to users.

These and other aspects of the invention are addressed in relation to the figures and related descriptions.

The foregoing summary of aspects of the invention, as well as the following detailed description of various embodiments, is better understood when read in conjunction with the accompanying drawings, which are included by way of example, and not by way of limitation with regard to the claimed invention.

### Brief Description Of The Drawings

Figure 1 shows a schematic diagram of a general-purpose digital computing environment that can be used to implement various aspects of the invention.

Figure 2 illustrates an input device for generating user inputs in accordance with an illustrative embodiment of the present invention.

Figure 3 provides an illustration of the type of data generated by inertial sensors in accordance with aspects of the present invention.

Figure 4 is a flowchart depicting a method for measuring and processing data representing movement of the input device in accordance with aspects of the present invention.

Figure 5 illustrates an input device for enter user inputs in accordance with an additional illustrative embodiment of the present invention.

Figure 6 shows a paper coordinate system and an inertial coordinate system in accordance with embodiments of the present invention.

Figure 7 shows a pen with various dimensions in accordance with embodiments of the present invention.

Figure 8 shows the pen of Figure 7 with relation to a tip of the pen in accordance with embodiments of the present invention.

Figures 9-11 show various graphs of acceleration, velocity, and displacement in accordance with embodiments of the present invention.

**Detailed Description Of The Drawings**

Aspects of the present invention provide improved motion sensing using one or more inertial sensors. The input device may be equipped with sensors for detecting movement of the input device by measuring such indicators as velocity, acceleration, changes in electro-magnetic fields or other such detected indicators. Further aspects of the invention involve use of a memory incorporated within the input device for storing the sensed movement data for transmission to the intended device. Processing of the sensed movement data to generate images representative of hand written strokes may also be performed.

**Terms**

Input Device - a device for entering information, which may be configured for generating and processing information.

Pen - any writing implement that may or may not include the ability to store ink. In some examples a stylus with no ink capability may be used as a pen in accordance with embodiments of the present invention.

Inertial Sensor - any device or combination of devices that can be used to measure the movement of the input device in a variety of ways, including, but not limited to laterally, at the pen tip, or by a changing the orientation of the input device.

Accelerometer - a device or combination of devices that produce indications of the acceleration of the input device.

Gyroscope - a device or combination of devices that produce indications of the angular velocity of the input device.

Magnitometer - a device or combination of devices that senses changes in a magnetic field.

Camera - an image capture system.

Inductive element - a device incorporated within the input device for use in combination with a sensor board or the like in which the sensor board detects movement and/or positioning of the input device based on changes in an electromagnetic field caused by the inductive or resistive element.

Pressure Sensor - a device for detecting force such as the force exerted against the surface over which the input device is positioned.

Electronic Ink - A sequence or set of strokes with properties, a stroke being a sequence or set of captured points. A sequence of strokes may include strokes in an ordered form. The sequence may be ordered by the time captured or by where the strokes appear on a page. Other orders are possible. A set of strokes may include sequences of strokes or unordered strokes or any combination thereof. Ink may be expanded to include additional properties, methods, and trigger events and the like. When combined with at least some of these events, it may be referred to as an ink object.

Inertial Coordinates - a local geographic coordinate which has its origin at the location where the input device is used, such as the left top of the paper, and axes aligned with the directions of north, east and the local vertical (down).

Paper Coordinates - the coordinates of the surface over which the input device is moved, whether it is paper or some other surface.

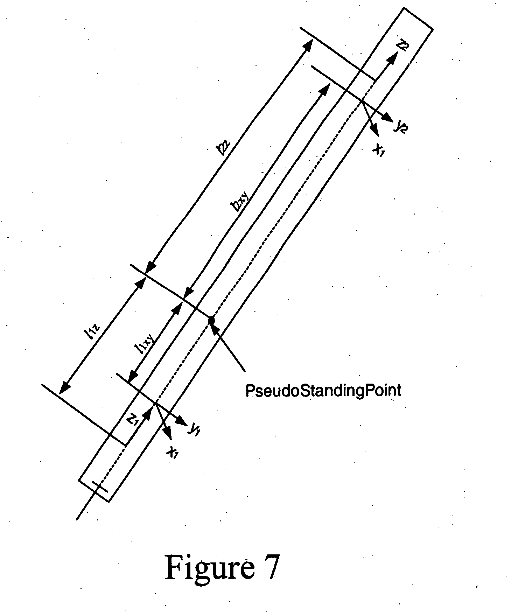

Psuedo Standing Point - an estimation of the position at which, where the user reverses direction of the device, the velocity of the input device reduces to zero. This may also be interpreted as an approximate point on/in the device, typically selected to be located below the middle position of the input device as shown in Figure 7. When the input device is used to write, this point moves "less" than other points. When the input device does not move, the output of the accelerometers contains only "orientation information" (information that may be used to determine the orientation of the input device in space and/or in relation to a surface). When the input device moves, the output value of accelerometers include the "acceleration information" (information that may be used to determine the acceleration) and the "orientation information" of the device. Both sets of information may be combined or related to complement each other. It is assumed that in most cases when the device is used to write, the major part of the acceleration of this point is "orientation information", and the minor part of it is "acceleration information." The minor part is small compared with the acceleration of gravity. The acceleration information may be used to compensate for the drift error of the gyroscope (as information in the measurement equations).

Host Computing Device - a desktop computer, a laptop computer, Tablet PC, a personal data assistant, a telephone, or any device which is configured to receive information from one or more input devices.

**General Purpose Operating Environment**

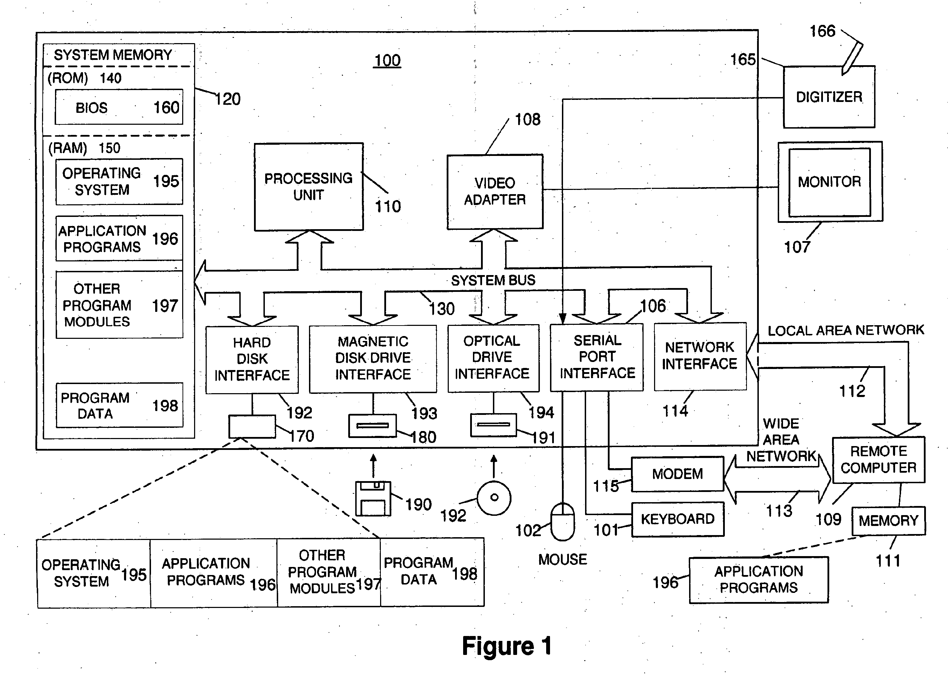

Figure 1 illustrates a schematic diagram of an illustrative conventional general-purpose digital computing environment that can be used to implement various aspects of the present invention. In Figure 1, a computer 100 includes a processing unit 110, a system memory 120, and a system bus 130 that couples various system components including the system memory to the processing unit 110. The system bus 130 may be any of several types of bus structures including a memory bus or memory controller, a peripheral bus, and a local bus using any of a variety of bus architectures. The system memory 120 includes read only memory (ROM) 140 and random access memory (RAM) 150.

A basic input/output system 160 (BIOS), containing the basic routines that help to transfer information between elements within the computer 100, such as during start-up, is stored in the ROM 140. The computer 100 also includes a hard disk drive 170 for reading from and writing to a hard disk (not shown), a magnetic disk drive 180 for reading from or writing to a removable magnetic disk 190, and an optical disk drive 191 for reading from or writing to a removable optical disk 192 such as a CD ROM or other optical media. The hard disk drive 170, magnetic disk drive 180, and optical disk drive 191 are connected to the system bus 130 by a hard disk drive interface 192, a magnetic disk drive interface 193, and an optical disk drive interface 194, respectively. The drives and their associated computer-readable media provide nonvolatile storage of computer readable instructions, data structures, program modules and other data for the personal computer 100. It will be appreciated by those skilled in the art that other types of computer readable media that can store data that is accessible by a computer, such as magnetic cassettes, flash memory cards, digital video disks, Bernoulli cartridges, random access memories (RAMs), read only memories (ROMs), and the like, may also be used in the example operating environment.

A number of program modules can be stored on the hard disk drive 170, magnetic disk 190, optical disk 192, ROM 140 or RAM 150, including an operating system 195, one or more application programs 196, other program modules 197, and program data 198. A user can enter commands and information into the computer 100 through input devices such as a keyboard 101 and pointing device 102. Other input devices (not shown) may include a microphone, joystick, game pad, satellite dish, scanner or the like. These and other input devices are often connected to the processing unit 110 through a serial port interface 106 that is coupled to the system bus, but may be connected by other interfaces, such as a parallel port, game port or a universal serial bus (USB). Further still, these devices may be coupled directly to the system bus 130 via an appropriate interface (not shown). A monitor 107 or other type of display device is also connected to the system bus 130 via an interface, such as a video adapter 108. In addition to the monitor, personal computers typically include other peripheral output devices (not shown), such as speakers and printers. In a preferred embodiment, a pen digitizer 165 and accompanying pen or stylus 166 are provided in order to digitally capture freehand input. Although a direct connection between the pen digitizer 165 and the serial port interface 106 is shown, in practice, the pen digitizer 165 may be coupled to the processing unit 110 directly, parallel port or other interface and the system bus 130 as known in the art. Furthermore, although the digitizer 165 is shown apart from the monitor 107, the usable input area of the digitizer 165 may be co-extensive with the display area of the monitor 107. Further still, the digitizer 165 may be integrated in the monitor 107, or may exist as a separate device overlaying or otherwise appended to the monitor 107.

The computer 100 can operate in a networked environment using logical connections to one or more remote computers, such as a remote computer 109. The remote computer 109 can be a server, a router, a network PC, a peer device or other common network node, and typically includes many or all of the elements described above relative to the computer 100, although only a memory storage device 111 has been illustrated in Figure 1. The logical connections depicted in Figure 1 include a local area network (LAN) 112 and a wide area network (WAN) 113. Such networking environments are commonplace in offices, enterprise-wide computer networks, intranets and the Internet.

When used in a LAN networking environment, the computer 100 is connected to the local network 112 through a network interface or adapter 114. When used in a WAN networking environment, the personal computer 100 typically includes a modem 115 or other means for establishing a communications over the wide area network 113, such as the Internet. The modem 115, which may be internal or external, is connected to the system bus 130 via the serial port interface 106. In a networked environment, program modules depicted relative to the personal computer 100, or portions thereof, may be stored in the remote memory storage device.

It will be appreciated that the network connections shown are illustrative and other techniques for establishing a communications link between the computers can be used. The existence of any of various well-known protocols such as TCP/IP, Ethernet, FTP, HTTP and the like is presumed, and the system can be operated in a client-server configuration to permit a user to retrieve web pages from a web-based server. Any of various conventional web browsers can be used to display and manipulate data on web pages.

**Inertial Sensor Input Device**

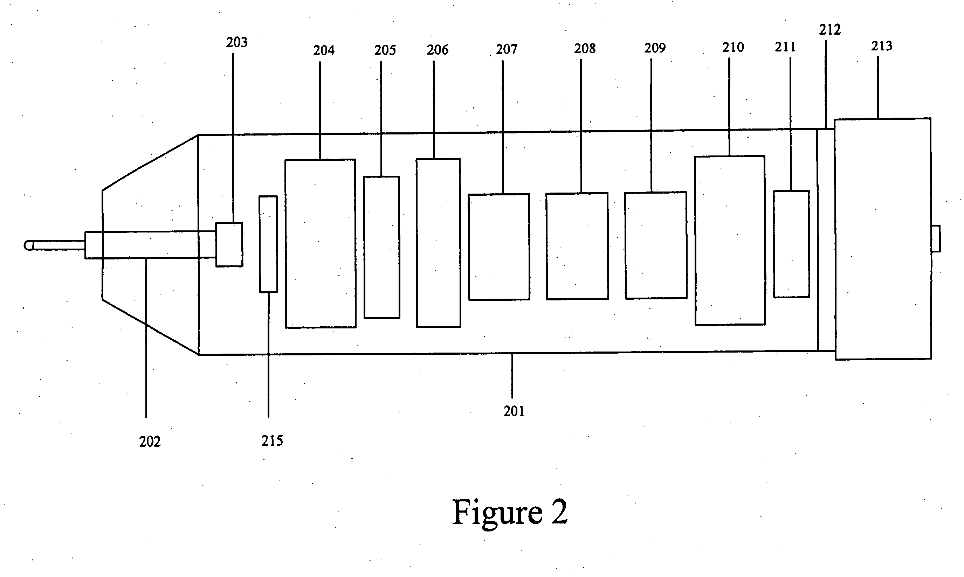

Figure 2 illustrates an illustrative embodiment of an input device for use in accordance with various aspects of the invention. In Figure 2, input device 201 may include one or more of the following: ink cartridge 202, pressure sensor 203, accelerometer 204, magnetic sensor 205, gyroscope 206, processor 207, memory 208, transceiver 209, accelerometer 210, power supply 211, docking station adapter 212, cap 213, inductive element 215, and a display, not shown. The various components may be electrically coupled as necessary using, for example, a bus, not shown, or wirelessly. Using one or more of the sensors may enhance the accuracy of the determination of the location of the input device.

Ink cartridge 202 may be included to enable use of the input device in a manner typical of a standard writing instrument such as a pen. The ink cartridge 202 may provide a comfortable, familiar medium for generating handwriting strokes on paper while movement of the input device is detected, recorded, and/or used to generate electronic ink. Pressure sensor 203 may be included for designating an input, such as might be indicated when the input device 201 is depressed while positioned over an object, for example. Moreover, the pressure sensor 203 may be used to detect the depressive force with which the user makes strokes with the input device, and such data may be used in varying the width of electronic ink generated. In some examples, however, the pressure sensor may be eliminated

Processor 207 may be comprised of any known processor for performing functions associated with various aspects of the invention. For example, the processor may include an FPSLIC AT94S40, that particular device including a 20 MHz clock and operating at 20 MIPS. The processor 207 may further operate to perform steps that may reduce power consumption, conserve power stored in power supply 211, such as powering down various components when the input device is inactive. Such powering down may be determined based on data or lack of data indicating an absence of movement and/or positioning of the device in a given amount of time, for example.

The processor 207 may further operate to calibrate and regulate the performance of various components. The processor also may be programmed to select from among a plurality of ink and/or movement processing algorithms stored in memory. For example, the processor may select an algorithm most suitable for detecting movement, in accordance with, for example, characteristics associated with the surface over which the device is moved or by the impact on sensing caused by the environment in which the device is used. When used in conjunction with an LCD screen, for example, the algorithm selected may be the one most useful for accurately recording inputs entered using fast, smooth stokes, while a different algorithm may be selected for processing inputs generated on paper made with slower, less smooth stokes. Other factors for selecting the algorithm may also be considered such as, for example, movement of the input device relative to the surface in an unstable environment.

The algorithm may be selected automatically based on performance considerations programmed into the input device. Alternatively, the processing algorithm may be selected manually. For example, using the input device and the display of a host computer, the user may scroll through options for setting the functions of the input device until arriving at the option associated with the appropriate settings for the input device, in a manner similar to that already found for monitors and the like in the "Control Panel" of MICROSOFT® operating systems.

Alternatively, input device settings, such as the processing algorithm selection described, may be achieved using the input device alone. User selections may be activated by depressing the input device, drawing symbols with the device that when detected are determined to indicate user inputs, and by other such means. In one example, the user may draw a symbol associated with the control function for identifying the surface over which the input device is about to be used. For example, the user may draw the symbol associated with the input device, the shape of a pen. Recognition of this symbol by the processor may cause the input device to enter a mode for enabling the user to next select the processing algorithm described, or any mode setting. Writing the word "settings" may, for example, indicate to the device that the next instruction is intended to set a mode associated with the pen. In this example, the user may enter another symbol, such as a number previously associated with the surface (describe in a manual, for example), such as a "2" corresponding to an indication that the input device is to be used with paper, or a predetermined graphical symbol indicating the use of the input device with paper, for selecting the processing algorithm to be used. Next, depression of the input device a certain number of times may then indicate that the mode setting procedure is complete, for example. While specific examples for interactively controlling the input device have been provided, use of any input and selection technique is well within the scope of the present invention.

In one embodiment, memory 208 may include one or more RAMs, ROMs, FLASH memories, or other memory device or devices for storing data, storing software for controlling the device, or for storing software for processing data, or otherwise. As noted; data representing positioning or the location of the input device may be processed within the input device 201 and stored in memory 208 for transfer to a host computer. Alternatively, the captured image data may be stored in memory 208 for transfer to a host device for processing or otherwise.

Transceiver, or communication unit, 209 may include a transmission unit and receiving unit. Information representing movement of the input device, either processed into a form suitable for generating and/or displaying electronic ink or otherwise, may be transmitted to a host computer, such as a desktop computer, laptop computer, Tablet PC, personal digital assistant, telephone, or other such device for which user inputs and/or electronic ink might be useful. The transceiver 209 may communicate with an external device using any wireless communication technique, including blue-tooth technology, for performing short-range wireless communications, infrared communications, or even cellular or other long-range wireless technologies. Alternatively, the transceiver 209 may control the transmission of data over a direct link to a host computer, such as over a USB connection, or indirectly through a connection with docking cradle 212, for example. The input device may also be linked directly to a particular host computer using a dedicated connection. The transceiver 209 may also be used to receive information and/or software, which, in one embodiment, may be downloaded for improving performance of the input device. For example, program information for updating the control functions of the processor may be downloaded from the host computer or otherwise via any of the previously described transmission/coupling techniques. Moreover, software may also be transmitted to or downloaded by the input device, including software for analyzing the image data and/or for calibrating the input device.

Power supply 211 may be included, particularly if the input device 201 is to be used independent of and remotely from a device in which the data is to be processed, stored and/or displayed. Power supply 211 may be incorporated into the input device 201 in any number of locations. For example, power supply 211 may be positioned for immediate replacement, should the power supply be replaceable, or to facilitate its recharging, should the power supply be rechargeable. Alternatively, the input device may be coupled to alternate power supplies, such as using an adapter for electrically coupling the input device 201 to a car battery, through a recharger connected to a wall outlet, to the power supply of a computer, or to any other power supply. Docking station adapter 212 may be comprised of known structure for electrically coupling the input device to other devices or to a power supply. The docking station adapter 211 also may be used for transferring information to an external device to which the docking station is coupled, directly or indirectly. Similarly, software, control information, or other data may be uploaded to the input device 201 via the docking station, which may also be used to recharge power supply 206.

Removable cap 213 may be used to cover the tip of the input device, which may include ink cartridge 202, and may also be equipped with a tip for facilitating resistive sensing if input device 201 is to be used with a device that includes a sensing board, for example. Similarly, inductive element 215 also may be included to enhance performance of the input device when used as a stylus in an inductive system. The shell of input device 201 may be comprised of plastic, metal, a resin, a combination thereof, or any material that may provide protection to the components of the device or provide overall structural integrity for the input device. While the input device shell may be made from a metal material, which may electronically shield sensitive electronic/magnetic components of the device, it need not be. For example, incorporation of a magnetic sensor may suggest that the structure of the input device be designed so that one or more sensor in the device is not shielded, so that the input device may, for example, detect magnetic fields.

Sensors for measuring movement or positioning of the input device consistent with various aspects of the present invention will now be described. Inertial sensors may include a number of sensor types. As illustrated in Figure 2, gyroscope 206 may be included to provide indications of the angular velocity of the input device 201. Samplings of such indications over time "t" may reflect movement of the input device during that time. In one embodiment, the gyroscope may provide an indication of movement and/or positioning of the input device in two dimensions. To determine the orientation of the input device, data representing the angle of the input device in the third dimension is required. In one embodiment, data generated by the set of magnetometers may be used to supplement this missing data.

In another illustrative embodiment of the invention, the orientation of the device is obtained with measurement of a set of accelerometers and a set of magnetometers.

In yet another illustrative embodiment of the invention, such as if acceleration cannot be measured accurately or additional information is desired, data generated by the magnetic sensor 205 may be used to derive the angular velocity of the input device in the third dimension. Magnetic sensor 205 may measure movements of the input device by detecting variations in measurements of the earth's magnetic field or the magnetic field generated by digitizer 165. Thus, data from the gyroscope may be used in combination with data from the magnetic sensor to obtain the orientation of the input device. A comparison of the orientation of the input device at a first time with that at a second time may provide, in part, information necessary to determine movement of the input device, as will be described further below.

Measurements providing an indication of movement of the input device the tip also may be useful in approximating movement of the input device, and thereby aid in the accurate generation of inputs including ink. For example, a sensor for measuring movement of the tip of the input device may be placed near or at the tip. Such placement, however, may interfere with positioning and/or use of an ink cartridge, and may cause the exposed sensor to be subject to damage. In alternative embodiments, a single accelerometer or set of accelerometers may be located within the input device for generating data representing acceleration of the device at points other than its tip. Such data may translated into data representing acceleration of the tip of the input device using translation algorithms. In one embodiment, data acquired from accelerometer 204 and accelerometer 210 may be translated to represent acceleration of the tip of the input device.

**[54]** As will be describe in more detail, data representing the orientation of the input device in combination with data representing the acceleration of the tip of the input device can be processed consistent with further aspects of the invention to accurately track movement of the input device at or near the surface over which the input device is moved and thereby produce data accurately representing the handwriting of the user. The resulting electronic ink will be of a higher quality with smoother transitions between incremental movements of the input device.

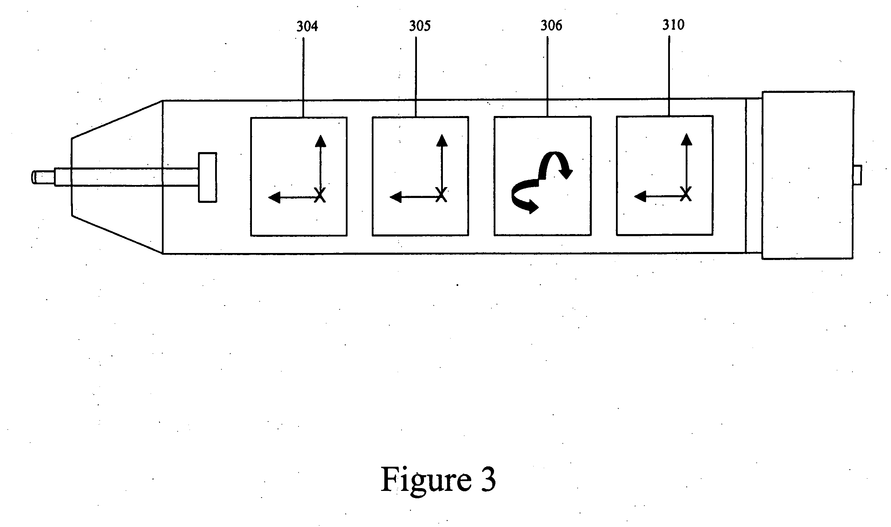

Figure 3 represents the input device and depicts examples of the data generated by representative inertial sensors. As depicted, gyroscope 306 produces indications of the angular velocity of the input device in two axes. Accelerometer 304 and accelerometer 310 generate indications of acceleration in three axes. Similarly, the magnetometer 305 senses changes in the magnetic pull of the earth along three axes. In combination, these measurements may produce extremely accurate indications of movement of the input device and thereby facilitate accurate recording of handwriting, via electronic ink, and other inputs. Alternative sensors to those recited may also be used to generate inputs.

Accurate representations of handwritten strokes may also be obtained using less than all of the previously described sensors. For example, gyroscopes perform in a complimentary manner to the performance of accelerometers. Where the velocity of an object remains relatively constant, the acceleration of that object may be negligible. Thus, for example, where the input device's movements are few over an extended period of time, indications of acceleration may prove inaccurate. In those instances, representation of angular velocity obtained using the gyroscope which may alone produce sufficient data to generate accurate results. During the time that the acceleration of the input device is dramatic, however, the velocity of the input device may not be a good indicator of movement. At such times, data generated by the accelerometers may provide the best indication of movement.

Moreover, because the gyroscope only produces information representing the orientation of the input device along two axes, for improved results, data representing the third axis may be obtained using the accelerometer, the magnetometer, or another gyroscope for example. When the device moves, the 2-axis gyroscope is used to represent the orientation of the input device along two axes. The set of magnetometers may provide the orientation of along the remaining axis. The acceleration of the pseudo standing point may be used to compensate for the drift error (and other possible errors) of gyroscopes.

As demonstrated, aspects of the invention enable the use of data generated by fewer than all of the recited sensors, or alternative sensors, at different times to produce accurate results. Such accuracy and flexibility may add to the cost of the overall device. Alternatively, incorporation of fewer sensors may be desirable to reduce overall expense and complexity of the input device.

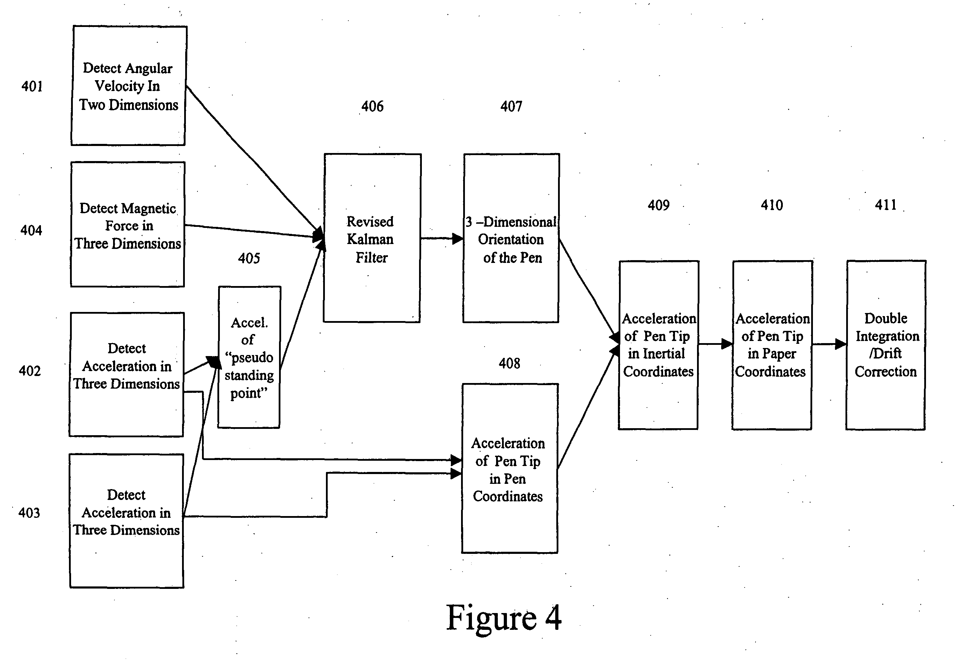

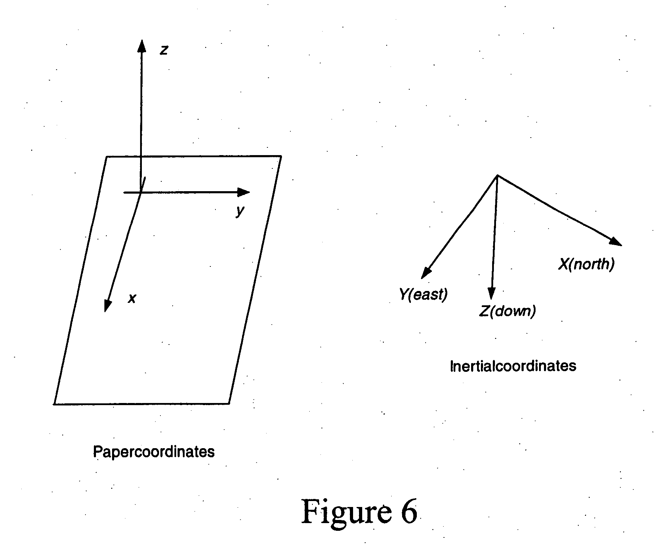

Figure 4 is flowchart depicting one illustrative embodiment implementing various aspects of the present invention. As will be explained in greater detail to follow in this embodiment, the orientation of the input device in a next sampling time is determined using a revised Kalman filter. Values representing the angular velocity of the input device in two axes may be supplemented using data from, for example, either the accelerometers or the magnetometer. Those inputs may be processed by the Kalman filter, or other suitable processing technique, to generate a calculation of the orientation of the input device. Simultaneously, acceleration of the tip of the input device may be determined using a translation of data generated by two sets of accelerometers. The indication of the orientation of the input device and the values representing the acceleration of the tip of the input device are converted into data representing the acceleration of the tip of the input device in inertial coordinates. A transform matrix is generated for converting from "inertial coordinates" (the measurements taken along the input device) to paper coordinates (the coordinates of the surface over which the input device is moved, whether it is paper or some other surface). Using that transform, the acceleration of the tip of the input device in "paper coordinates" is determined. The acceleration of the tip of the input device in "paper coordinates" may then be twice integrated, the result providing the track of the input device over the course of the current sampling time. Drift correction may also be performed to improve the resultant track indications. Inertial coordinates may be used to define the location of the pen. For example, inertial coordinates and paper coordinates are shown in Figure 6. The obtained orientation of the device in inertial coordinates may be transferred to the paper coordinate when the paper coordinate is not aligned with the inertial coordinate by a calibration process. A sample calibration process follows.

The input device is put in a special orientation $C_p^n$ so that the pen coordinate is aligned with the paper coordinate. $C_p^n$ is actually the orientation of the paper coordinate in inertial coordinate, and is calculated using the following algorithm. Any time when the orientation of the input device in inertial coordinate $C_b^n$ is calculated, the orientation of the input device in paper coordinate is obtained as $C_b^p = (C_p^n)^{-1} C_b^n = (C_p^n)^T C_b^n$, where $C_p^n$, $C_b^n$ and $C_b^p$ are direction cosine matrix. $(C_p^n)^{-1} = (C_p^n)^T$ is a basic property of direction cosine matrix. See, for example, D.H.Titterton and J.L.Weston, Strapdown Inertial Navigation Technology, IEE Radar, Sonar, Navigation and Avionics Series 5, 1997, Perter Peregrinus Ltd., whose contents are incorporated by reference.

In accordance with one embodiment of the present invention, as depicted in Figure 4, electronic ink accurately representing handwriting is generated based on data output from one or a combination of inertial sensors. In the depicted embodiment, a two-axis gyroscope produces data representing the angular velocity of the input device as it moves from time "0" to time "t", as indicated in step 401 of the flowchart. Those values may be 'transferred to the revised Kalman filter for processing, as represented by step 406. Information corresponding to movement of the input device in a third dimension, which may assist in estimating movement of the input device during time "t", may supplement the information generated by the two-axis gyroscope. Therefore, in accordance with the illustrative embodiment illustrated, data representing movement of the input device in the third dimension may be determined from measurements of sensors in addition to a first sensor, such as the gyroscope illustrated.

In steps 402 and 403 of the flowchart, values representing the acceleration of the front portion of the input device, for example, generated by a first set of accelerometers, and values representing acceleration of the rear portion of the input device, generated by a second set of accelerometers, are used to supplement the missing data. To further improve accuracy, the acceleration values obtained may be calibrated using a "pseudo-standing" point calibration technique, represented in step 405, based on, for example, an estimation of the position at which, where the user reverses direction of the device, the acceleration of the input device reduces to zero. That calibration employs an algorithm that detects when the speed of the input device should be zero, and compensates for any offsets that might occur in detected data values. Alternative processing techniques for improving the accuracy with which acceleration data indicates movement may be used in place of, or in addition to, the calibration step 405, described. The acceleration values may then be input to the revised Kalman filter.

As shown in Figure 7, when the input device moves, the "orientation" and "acceleration" information are coupled in the output of the accelerometers, the acceleration of the pseudo standing point of the input device contains "less" acceleration information and "more" orientation information, so the acceleration value of the pseudo standing point is used to estimate orientation or provide a compensation of the gyroscope output. The acceleration value of the pseudo standing point may be obtained from the two sets of accelerometers as follows:

$$a_x = \frac{I_{2xy}}{I_{1xy} + I_{2xy}} a_{1x} + \frac{I_{1xy}}{I_{1xy} + I_{2xy}} a_{2x}$$

$$a_y = \frac{I_{2xy}}{I_{1xy} + I_{2xy}} a_{1y} + \frac{I_{1xy}}{I_{1xy} + I_{2xy}} a_{2y}$$

$$a_z = \frac{I_{2xy}}{I_{1xy} + I_{2xy}} a_{1z} + \frac{I_{1xy}}{I_{1z} + I_{2z}} a_{2z}$$

where $I_{1xy}$ and $I_{2xy}$ are the distances from the two sets of x-y axis accelerometers to the pseudo standing point, $I_{1z}$ and $I_{2z}$ are the distances from the two sets of z axis accelerometers to the pseudo standing point, $a_x$, $a_y$ and $a_z$ are the accelerations of pseudo standing point in three axes respectively. $a_{1x}$, $a_{1y}$, $a_{1z}$ are the 3-axis accelerations of the bottom set of accelerometers, $a_{2x}$, $a_{2y}$ and $a_{2z}$ are the 3-axis accelerations of the top set of accelerometers.

As previously noted, data generated by the accelerometers may not consistently provide accurate indications of movement of the input device. For example, when the input device is moved with substantially constant velocity, and the acceleration of the input device in any direction is approximately zero, the accelerometers may yield undesirable results. In such cases, measurements generated by alternate sensors may be used in place of acceleration data. For example, a three-axis magnetometer, such as that previously described, may aid in estimating movement of the input device by providing an indication of movement of the input device in a third dimension, for example. The magnetometer may sense movement of the input device by measuring changes in measurements corresponding to the earth's magnetic field, as shown in step 404. Those measurements may then be input into the revised Kalman filter for processing in step 406. Of course, such sensors are highly sensitive to magnetic interference and may require frequent recalibration of the device and/or processing of the measured data may be required to correct for interference.

In accordance with the illustrated embodiment, as depicted in step 406 of the flowchart, data from the gyroscope and the accelerometers or the magnetic sensors are all input to the processor for processing in accordance with a revised Kalman filter. The filter produces data representing the current 3D orientation of the input device, as shown in step 407. The illustrative embodiment describes use of a revised Kalman filter for estimating the orientation of the input device, in part, because the Kalman filter is a recursive feedback filter employing a least-squares method that may accurately predict future values based on current values. Alternatively, other predictive filters or processing techniques for generating an accurate representation of the orientation of the input device using any number of measured data indicative of movement and/or positioning of the device may also be employed. Other filtering techniques may also be used including but not limited to the extended Kalman filter

Simultaneously, as depicted in step 408, acceleration of the tip of the input device, such as a pen, in "pen coordinates" (the coordinates corresponding to the input device), may be determined from data output by the two sets of accelerometers, for example. As previously indicated, data from the two sets of accelerometers, each positioned at spaced locations along the axis of the input device, is transformed using a transformation process to provide an indication of the acceleration of the input device at the tip during time interval "t." In one example, the transformation from coordinates along the axis of the input device to the tip of the device may be predetermined using previous calibrations, estimation techniques, or any technique for translating values to accurately represent movement of the tip of the input device. Data representing acceleration of the input device at its tip in pen coordinates may then be converted to data representing the acceleration of the input device at its tip in inertial coordinates, shown in step 409, using the previously described current 3D orientation of the input device determined in step 407.

One may determine the pen tip acceleration as follows. Pen tip acceleration is obtained as follows.

$$a_x^{tip} = \frac{l_{4xy}}{l_{4xy} - l_{3xy}} a_{1x} - \frac{l_{3xy}}{l_{4xy} - l_{3xy}} a_{2x},$$

$$a_y^{tip} = \frac{l_{4xy}}{l_{4xy} - l_{3xy}} a_{1y} - \frac{l_{3xy}}{l_{4xy} - l_{3xy}} a_{2y},$$

$$a_z^{tip} = \frac{l_{4z}}{l_{4z} - l_{3z}} a_{1z} - \frac{l_{3z}}{l_{4z} - l_{3z}} a_{2z},$$

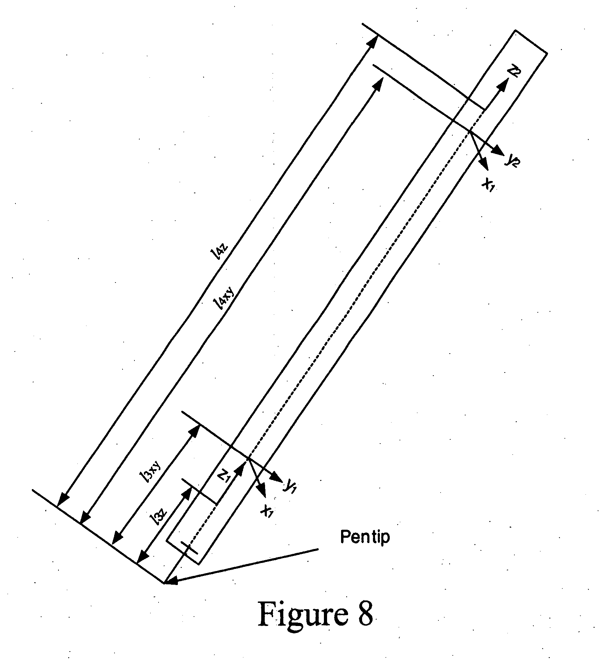

where $l_{3xy}$, $l_{4xy}$, are the distances from the 2 set of x-y axis accelerometers to the pen tip, $l_{3z}$, and $l_{4z}$ are the distances from the 2 set of z axis accelerometers to the pen tip, $a_{tip}^x$, $a_{tip}^y$ and $a_{tip}^z$ are the accelerations of the pen tip in 3 axes respectively. Figure 8 shows the dimensions relating to the above algorithms.

A transformation matrix for transforming from the "inertial coordinates" to the coordinates of the surface over which the input device is moved may be determined, for example, based on a calibration procedure performed previously. Such calibration steps may occur at the time of assembly, manufacture, before each use, at pauses during use, or at any time. Where the surface over which the input is moved is paper, the coordinates of such a surface have been described as "paper coordinates." However, the input device may be moved over any number of surfaces, and reference to "paper coordinates" is not intended to limit use of the input device or the description of the transform to such surfaces.

As shown in step 410 of the flowchart, acceleration of the input device at the tip in paper coordinates, where the device is moved over paper, is determined by converting acceleration data into inertial coordinates using the transformation matrix described. The resultant acceleration may then be twice integrated, as depicted in step 411, thereby generating a track of the movement of the input device. Finally, the track data may further be processed by performing drift correction. As a result of the above-described operation, movement of the input device at the tip is tracked, producing data representing the electronic ink corresponding to movement of the input device.

The following is an example of how drift correction may function. Initially, the states of the input device are labeled as "moving" or "not moving" in each sampling time by judging the consistency of the acceleration obtained in the current sampling time and the adjacent several sampling points. For example, one may use 8 sampling points before and 8 sampling points after the current sampling time. It is appreciated that other numbers of sampling points may be used. If all the measured acceleration values during this 17 points period are near a fixed value, the state of this sampling time is labeled as "not moving." The fixed value may then be treated as the acceleration drift error. (The sampling period is typically 10 ms.) When a new "not moving" state is detected, the acceleration values in the last continuous "moving" state are revised using the following algorithm.

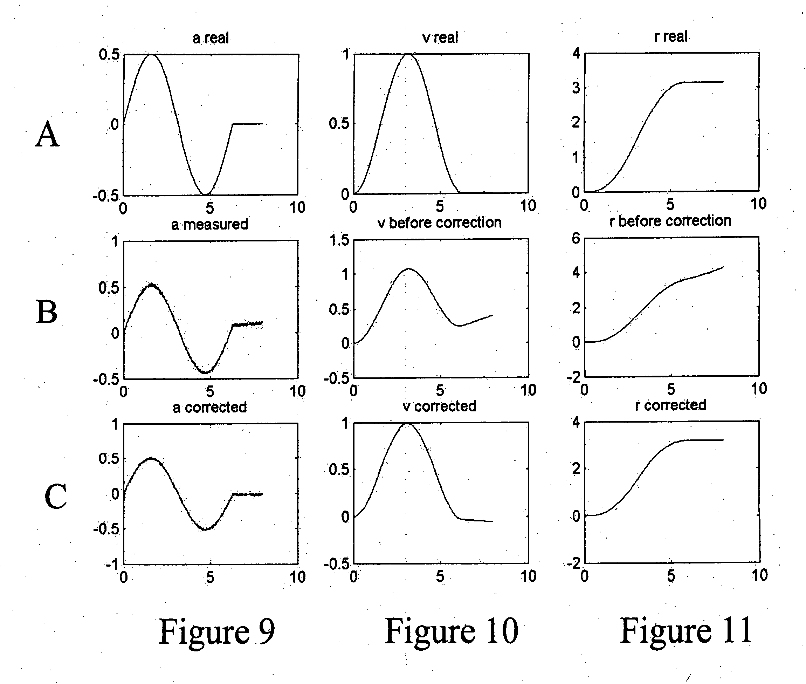

It is assumed that the drift error is linearly increasing during a "moving" state period. The increasing ratio is calculated according to the total drift error in the labeling phase. Next, the drifting errors in each sampling point are subtracted from the acceleration values in the period to obtain the revised acceleration values in the period. By integrating the revised acceleration values, the revised velocity values are obtained, but the revised velocity value in the first "not moving" state after this "moving" period is still possibly not zero. It is further assumed the velocity drift error is linearly increasing in the last "moving" period. The revised "revised velocity" values are obtained by using the similar approach in the acceleration revising case. Consequently the revised "revised velocity" values are integrated to obtain the revised displacement value in the last "moving" period. The same algorithm is utilized for the drift correction of the input device in 2 directions on a surface, but only one direction case is illustrated here. Figures 9A-11C show the various applications of drift correction. Figure 9 relates to acceleration. Figure 10 relates to velocity. Figure 11 relates to displacement. Figures 9A, 10A, and 11A relate to actual input values. Figures 9B, 10B, and 11B show measured values including the drift error. Figures 9C, 10C, and 11C show the corrected versions of each.

As previously described, one aspect of the invention involves processing of sensed data to determine movement of the input device, and determining electronic ink representing such movement. In one illustrative embodiment a revised Kalman filter was used for calculating the three dimensional orientation of the input device in the inertial coordinates. Derivation of such a processing algorithm is described below.

Equation (1) shows the basic system translation matrix:

$$\dot{C}_b^n = C_b^n \cdot \Omega_b \tag{1}$$

where, $C_b^n$ is the direction cosine matrix that translates from pen coordinates to inertial coordinates:

$$\Omega_b = \begin{bmatrix} 0 & -\omega_z & \omega_y \\ \omega_z & 0 & -\omega_x \\ \omega_y & \omega_x & 0 \end{bmatrix}, \ \omega = [\omega_x \ \omega_y \ \omega_z]^T,$$

where $\omega_x, \omega_y, \omega_z$ is the angular rate vector in "pen coordinates," which can be measured using the gyroscope.

Basic equation (1) can be simplified to:

$\dot{C} = C \cdot \Omega$, where its discrete form is as follows:

$$C(k+1) = C(k+1) \cdot A(k) \tag{2}$$

where,

$$A(k) = I_{3x3} + [\Omega] \cdot \Delta t + \cdots$$

$$\approx I_{3x3} + [\Omega] \cdot \Delta t$$

$$= \begin{bmatrix} 1 & -\sigma_z & \sigma_y \\ \sigma_z & 1 & -\sigma_x \\ -\sigma_y & \sigma_x & 1 \end{bmatrix}$$

where $\sigma = \omega \cdot \Delta t$, $\sigma = [\sigma_x, \sigma_y, \sigma_z]^T$, where $\Delta t$ is the sampling time.
And the state vector becomes

$$\bar{x} = \begin{bmatrix} x_1 & x_2 & x_3 \end{bmatrix}^T = \begin{bmatrix} \sigma_x & \sigma_y & \sigma_z \end{bmatrix}^T.$$

Then the state translation is broken into the following:

$$x_1(k+1) = \sigma_x(k+1) = \bar{\omega}_x(k,k+1)\cdot\Delta t$$

$$x_2(k+1) = \sigma_y(k+1) = \bar{\omega}_y(k,k+1)\cdot\Delta t$$

$$x_3(k+1) = \sigma_z(k+1) = \bar{\omega}_z(k,k+1)\cdot\Delta t$$

where, $\bar{\omega}(k,k+1)$ is the average value of the angular velocity from $t(k)$ to $t(k+1)$. Because $\omega_z$ is unknown, however, a measurement from the accelerometers, or magnetic sensors, may be used to calculate $x_3 (k + 1)$ Equations for determining angular velocity in inertial coordinates are described as follows. The acceleration in inertial coordinates is calculated by transforming the measured acceleration of the input device in pen coordinates $(\bar{a}b)$ to inertial coordinates using the $C_b^n$ translation.

$$\bar{a}_n = C_b^n \cdot \bar{a}_b \qquad (3)$$

To determine the magnetism of the input device in inertial coordinates, which is equal to that of the acceleration in inertial coordinates the same calculation is performed.

$$\bar{m}_n = C_b^n \cdot \bar{a}_b \qquad (4)$$

Equation (3) can be rewritten to standard form as:

$$\bar{a}_n = C_b^n(k+1)\cdot\bar{a}_b(k+1) = C(k)\cdot A(k)\cdot \bar{a}_b$$

$$C^T(k)\cdot \bar{a}_n = A(k)\cdot \bar{a}_b$$
$$= \bar{a}_b - [\bar{a}_b]\cdot \bar{x}$$

$$\bar{a}_b - C^T(k)\cdot\bar{a}_n = [\bar{a}_b]\cdot\bar{x}$$

$C^T (k) \, C^{-1}(k)$, where $(\cdot)^T$ means matrix transform, $(\cdot)^{-1}$ means matrix inverse, this is a property of direction cosine matrix. The measurement vector corresponding to measured acceleration becomes:

$$z_a = \bar{a}_b - C^T(k)\cdot\bar{a}_n$$

Substituting the equation becomes $z_a = [\bar{a}_b]\cdot\bar{x}$. Rewritten in detail becomes,

$$\begin{cases} z_{a_1} = -a_z \cdot x_2 + a_y \cdot x_3 & 5(a) \\ z_{a_2} = a_z \cdot x_1 - a_x \cdot x_3 & 5(b) \\ z_{a3} = -a_y \cdot x_1 + a_x \cdot x_2 & 5(c) \end{cases}$$

Similarly, the measurement vector corresponding to magnetic sensor is:

$$z_m = \overline{m}_b - C^T(k) \cdot \overline{m}_n,$$

With substitution the equation is solved into, $z_m = [m_b] \cdot \overline{x}$, which can be rewritten in detail as follows,

$$\begin{cases} z_{m_1} = -m_z \cdot x_2 + m_y \cdot x_3 & 6(a) \\ z_{m_2} = m_z \cdot x_1 - m_x \cdot x_3 & 6(b) \\ z_{m3} = -m_y \cdot x_1 + m_x \cdot x_2 & 6(c) \end{cases}$$

The determination of state translation for $x_3$ ($k$+1) can be obtained using the first and second sub-equations of equations (5a-5c), by solving for $x_3$. Then the measurement equations can be constructed by the rest of equation (6) and equation (1).

The determination of state translation for $x_3$ ($k$+1) is obtained from equation (5a) and (5b). The measurement equations are constructed by the equation (5c), (6a), (6b) and (6c) as follows.

$$\begin{bmatrix} z_{a_3} \\ z_{m_1} \\ z_{m_2} \\ z_{m_3} \end{bmatrix} = \begin{bmatrix} -a_y & a_x & 0 \\ 0 & -m_z & m_y \\ m_z & 0 & -m_x \\ m_y & m_x & 0 \end{bmatrix} \times \begin{bmatrix} x_1 \\ x_2 \\ x_3 \end{bmatrix}.$$

When the input device is parallel to the magnetic field of the earth, both $m_x$ and $m_y$ will be extremely small, and the error in the value $x_3$ ($k$+1) obtained from the equation (5a) and (5b) will become too great. In that case, the equation (6a) and (6b) are used to obtain $x_3$ ($k$+1), consequently, the equation (5a) (5b) (5c) and (6c) are used to construct measurement like the equation (7) in the comment 13.

In this revised Kalman filter, the output of gyroscope, as well as part of the output of magnetometers or accelerometers provide the state prediction, the other part of the output of magnetometers and accelerometers provide the state measurement, and correct the prediction error.

As described in one embodiment of the present invention, using a modified Kalman filter, the current attitude of the input device in inertial coordinates can be determined. Having determined the translation matrix for conversion from the pen coordinates to the inertial coordinates, and having previously obtained the transformation matrix corresponding to the transformation from inertial coordinates to paper coordinates by calibration, the transformation matrix from pen coordinates to paper coordinates can be determined. Accordingly, the track of the input device's tip can be calculated by integrating the acceleration of the tip transformed into the spatial coordinates of the surface over which the input device is moved. Accurately determining movement of the pen will provide data necessary for generating accurate inputs, by accurately measuring movement of the input device tip for recording strokes in a manner similar to that generated by conventional writing instruments, with the exception that the input device need not contact the surface for such movements to be recorded.

While the illustrative embodiment described employed a single gyroscope, plural acceleration sensors, and a magnetic sensor, that description is in no way intended to limit the invention to systems using those components. Rather, any substitution, supplementation, removal or other modification of the illustrative embodiment described is within the scope of the present invention.

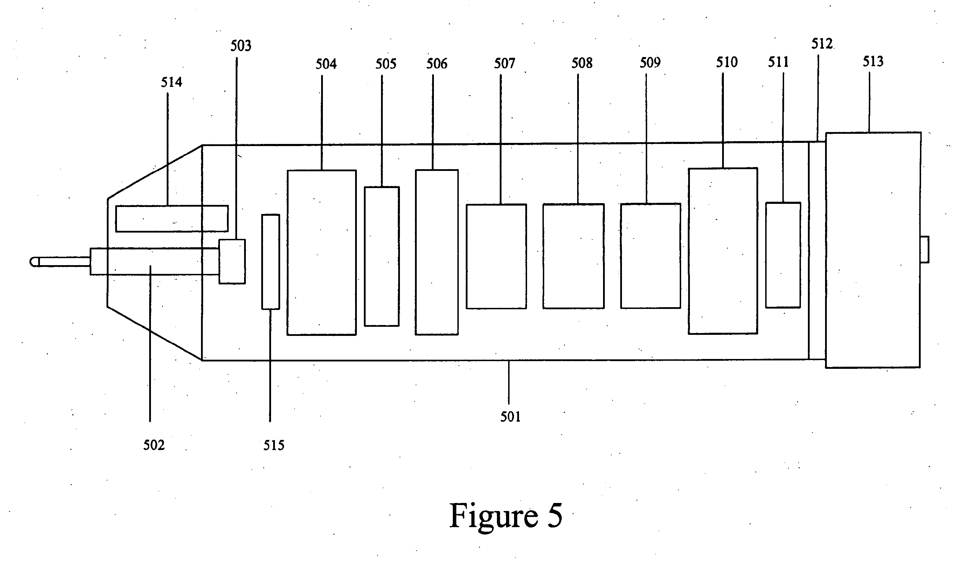

Figure 5 illustrates an illustrative embodiment of an input device incorporating a camera for capturing images for use in accordance with various aspects of the invention. In Figure 5, input device 501 includes ink cartridge 502, pressure sensor 503, accelerometer 504, magnetic sensor 505, gyroscope 506, processor 507, memory 508, transceiver 509, accelerometer 510, power supply 511, docking station adapter 512, cap 513, camera 514, inductive element 215 and a display, not shown. Some of the elements may be omitted. For example, the ink cartridge may be eliminated if reliance solely on the display is desired.

In this embodiment, a camera may be added to complement, or in place of, one or more of the sensors described, to assist in tracking lateral movement or the orientation of the input device. Camera 514 may be included to capture images of the surface over which the input device is moved, and thereby to detect movement of the input device over the surface being scanned. In that case, processing of optical information may be performed and combined with, or used in place of, data generated by one or more sensors described, with modifications to the processing algorithm made as necessary to accurately determine movement of the input device. Measurement of positioning or movement of the input device may be performed based on, at least in part, detection of patterns or changes in features within the images captured depicting the surface over which the input device is moved, using an image sensor built into the tip of the input device and the appropriate image processing techniques, for example. Such additional information may be factored into the algorithm employed to determine position and/or movement of the input device for the generation of electronic ink. As elements may be added and/or removed, processing techniques may be replaced, updated, or otherwise modified to compensate for the loss of information or the addition of information generated by those devices. Modifications to the Kalman filter described, or other processing algorithm used, may be made consistent with the present invention, and the use of different processing techniques for estimating pen tip movement from data generated by one or more sensors for measuring movement of the input device is within the scope of the present invention.

While the illustrative embodiments illustrated depict devices utilizing specific components, the addition of components and/or removal of the component depicted, with modification to the device consistent with such changes, is within the scope of the present invention. Similarly, the relocation of components, within or external to the input device body, is further within the scope of the present invention.

The illustrative embodiments have described an input device implemented in the shape of a writing instrument such as a pen. Aspects of the present invention are applicable, however, to input devices of any number of shapes and sizes. For example, the input device may take on an ergonomic shape and may include indentations for improved comfort and control.

Although the invention has been defined using the appended claims, these claims are illustrative in that the invention may be intended to include the elements and steps described herein in any combination or sub combination. Accordingly, there are any number of alternative combinations for defining the invention, which incorporate one or more elements from the specification, including the description, claims, and drawings, in various combinations or sub combinations. It will be apparent to those skilled in the relevant technology, in light of the present specification, that alternate combinations of aspects of the invention, either alone or in combination with one or more elements or steps defined herein, may be utilized as modifications or alterations of the invention or as part of the invention. It may be intended that the written description of the invention contained herein covers all such modifications and alterations. For instance, in various embodiments, a certain order to the data has been shown. However, any reordering of the data is encompassed by the present invention. Also, where certain units of properties such as size (e.g., in bytes or bits) are used, any other units are also envisioned.

**Claims**

1. An input device for generating data representing movement of the input device, the input device comprising:

   plural inertial sensors that sense movement of the input device and generate data representing the sensed movement; and
   a processor receiving the data representing the sensed movement of the input device.

2. An input device according to claim 1 wherein the inertial sensors include a sensor for sensing angular velocity.

3. An input device according to claim 2 wherein the sensor for sensing angular velocity comprises a dual-axis gyroscope.

4. An input device according to claim 1 wherein the inertial sensors include an acceleration sensing unit.

5. An input device according to claim 4 wherein the inertial sensors include a pair of acceleration sensing units.

6. An input device according to claim 5 wherein each acceleration sensing unit senses acceleration in three dimensions.

7. An input device according to claim 5 wherein each acceleration sensing unit comprises a pair of accelerometers.

8. An input device according to claim 1 wherein the inertial sensors include a magnetic field sensor.

9. An input device according to claim 1, wherein the processor receives data representing the sensed movement of the input device, said processor creating an image file representing handwritten ink.

10. An input device according to claim 1, the input device further including a communication unit for communicating with a remote processing unit.

11. An input device according to claim 10, wherein the remote processing unit corresponds to a processor within a host computer and the communication unit transmits data representing sensed movement of the input device to the host computer.

12. An input device according to claim 1, the input device further including a memory for storing data representing the sensed movement of the input device.

13. An input device according to claim 1, the input device further including a power supply.

14. An input device according to claim 1, the input device further including a force sensor.

15. An input device according to claim 1, the input device further including a camera.

16. An input device according to claim 1, wherein the input device is in the shape of a pen.

17. An input device for generating data corresponding to movement of the input device, the input device comprising:

an inertial sensor that senses movement of the input device and generates data representing the sensed movement;
a memory for storing data representing the sensed movement of the input device;
a processor receiving the data representing the sensed movement of the input device; and
a communication unit for communicating with a remote processing unit.

18. An input device according to claim 17 wherein the inertial sensor includes a sensor for sensing angular velocity.

19. An input device according to claim 18 wherein the input device further includes one or more inertial sensors for sensing acceleration of the input device.

20. An input device according to claim 19 wherein the inertial sensor for sensing acceleration of the input device includes a pair of spaced acceleration sensing units.

21. An input device according to claim 18 wherein the input device further includes a magnetic field sensor.

22. An input device according to claim 17, wherein the input device further includes a camera.

23. An input device according to claim 17, wherein the processor receives data representing the sensed movement of the input device, said processor creating an image file.

24. An input device according to claim 17, the input device transmitting data representing movement of the input device to a host computer for generating signals representative of handwritten ink.

25. An input device according to claim 17, wherein the input device is in the shape of a pen.

26. A method for creating image data including electronic ink information, comprising the steps of:

generating data representing movement of an input device based on signals output by plural inertial sensors; and
creating image data from the generated data.

27. The method according to claim 26, wherein generating data representing movement of the input device includes sensing angular velocity of the input device.

28. The method according to claim 26, wherein generating data representing movement of the input device includes sensing angular velocity of the input device using a dual-axis gyroscope.

29. The method according to claim 26, wherein generating data representing movement of the input device includes sensing acceleration of the input device.

30. The method according to claim 26, wherein generating data representing movement of the input device includes sensing acceleration of the input device using an acceleration sensing unit.

31. The method according to claim 26, wherein generating data representing movement of the input device includes sensing acceleration of the input device using a pair of acceleration sensing units, each sensing unit sensing acceleration in three axes.

32. The method according to claim 26, wherein generating data representing movement of the input device includes sensing acceleration of the input device.

33. The method according to claim 26, wherein creating image data includes processing data representing movement of the input device to determine the orientation of the input device.

34. The method according to claim 33, wherein processing data representing movement of an input device includes processing information representing the angular velocity of the input device.

35. The method according to claim 33, wherein processing data representing movement of an input device includes processing information representing the angular velocity of the input device and information representing the acceleration of one end of the input device.

36. The method according to claim 35, wherein information representing the angular velocity of the input device is generated from a gyroscope.

37. The method according to claim 35, wherein information representing the acceleration of one end of the input device is obtained from two sets of acceleration measuring units spaced apart within the input device, and each set of acceleration measuring units including a pair of accelerometers.

38. The method according to claim 37, wherein processing data representing movement of an input device includes preprocessing the information obtained from the two sets of acceleration measuring units to correct for drift error of the acceleration, velocity, and displacement of one end of the input device.

39. The method according to claim 33, wherein processing data representing movement of an input device includes processing information representing the angle of the input device and information representing changes in a magnetic field surrounding the input device.

40. The method according to claim 33, wherein processing data representing movement of the input device includes performing calculations in accordance with a revised Kalman filter to determine the orientation of the input device.

41. The method according to claim 26, wherein creating image data includes processing data representing movement of an input device and determining the acceleration of one end of the pen.

42. The method according to claim 43, wherein processing information representing movement of the input device includes processing information obtained from two sets of acceleration measuring units spaced apart within the input device.

43. The method according to claim 26, wherein creating image data includes processing data representing movement of an input device to determine the orientation of the input device and processing data representing movement of an input device to determine the acceleration of the pen.

44. The method according to claim 26, wherein creating image data further includes transforming data representing movement of an input device to the spatial coordinates of the surface over which the input device is moved.

45. The method according to claim 26, wherein creating at least one image from ink information further includes performing integration on data representing the acceleration of the pen tip converted into the coordinates of the surface over which the input device is moved to create ink information.

46. The method according to claim 45, wherein creating at least one image from ink information further includes performing drift correction on the integrated data.

**Figure 1**

EP 1 441 279 A2

Figure 2

Figure 3

Figure 4

Figure 5

Figure 6

Figure 7

Figure 8

Figure 9          Figure 10          Figure 11